# EUROPEAN PATENT SPECIFICATION

(11) **EP 0 627 336 B1**
(45) Date of publication and mention of the grant of the patent: **27.02.2002**
(21) Application number: 94108453.5
(22) Date of filing: 01.06.1994
(51) Int. Cl.: F16H 61/06

(54) **Shift control system for automatic transmissions**
Schaltsteuerung für ein automatisches Getriebe
Système de commande à changement de vitesse pour une transmission automatique

(30) Priority: 03.06.1993 JP 15798893
(43) Date of publication of application: 07.12.1994
(73) Proprietor: AISIN AW CO., LTD., Anjo-shi Aichi-ken (JP)
(72) Inventor: Hamajima, Tetsuo, Toyota-shi, Aichi-ken (JP); Oba, Hidehiro, Toyota-shi, Aichi-ken (JP); Kimura, Hiromichi, Toyota-shi, Aichi-ken (JP); Ando, Masahiko, Anjo-shi, Aichi-ken (JP); Fukatsu, Akira, Anjo-shi, Aichi-ken (JP); Yamamoto, Yoshihisa, Anjo-shi, Aichi-ken (JP); Hayabuchi, Masahiro, Anjo-shi, Aichi-ken (JP); Tsukamoto, Kazumasa, Anjo-shi, Aichi-ken (JP)
(74) Representative: VOSSIUS & PARTNER

(56) References cited:
- EP-A- 0 288 779
- EP-A- 0 331 523
- EP-A- 0 435 377
- EP-A- 0 435 378
- EP-A- 0 475 585
- EP-A- 0 524 450
- EP-A- 0 578 223
- EP-A- 0 583 954
- US-A- 5 003 842
- US-A- 5 207 122
- PATENT ABSTRACTS OF JAPAN vol. 014, no. 193 (M-0963), 19 April 1990 & JP-A-02 037128 (MAZDA MOTOR CORP), 7 February 1990,

## Description

The present invention relates to a system for controlling the shift of an automatic transmission and, more particularly, to a shift control system for an automatic transmission to execute the so-called "clutch-to-clutch shift".

The shift, which is effected by releasing first frictional engagement element and by applying second frictional engagement element, is called the "clutch-to-clutch shift". In this shift, the so-called "overlap state", in which the two frictional engagement elements are temporarily given a torque capacity higher than a predetermined value, is effected for an upshift whereas the so-called "underlap state", in which the two frictional engagement elements are temporarily released, is effected for a downshift by the oil pressure which is controlled by electric signals.

At the time of the aforementioned shift in the prior art, the controlled oil pressure has its correction set to apply the amount of correction to subsequent and later shifts by detecting the blown-up state of the engine in terms of the input/output R.P.M. so as to prevent the excessive engine blowup, which is caused by the failure of the oil pressure to change, as expected, for the electric signals or the reduction of the output shaft torque due to the tie-up (as disclosed in U.S.P. No. 5,018,068).

In the construction described above, however, the correction of the controlled oil pressure is so set that the engine may not be blown up. Since the controlled oil pressure is not corrected when the blowup of the engine is not detected, the output shaft torque drops to invite a shift shock if the tie-up occurs.

It is, therefore, conceivable to detect the tie-up so that the correction of the controlled oil pressure may be set on the basis of the detected value. However, it is difficult to detect the tie-up from the input/output R.P.M. Still the worse, it costs a high price and enlarges the size of the system to arrange a special torque sensor for detecting the torque from the input/output shaft, for example. For this arrangement, the automatic transmission has to be substantially modified.

EP-A-0 288 779 discloses a method for controlling the transfer of load from one friction element to another friction element while making a gear ratio change in an automatic transmission. The synchronous engine speed is increased by slipping the offgoing clutch. A constant is calculated from known speed ratios of the gear set, engine inertia, the difference in engine speed from synchronous speed and a constant that corresponds to the output torque at the end of the torque phase of the gear ratio shift. The time rate of change of the offgoing clutch torque is calculated and the clutch pressures are changed in accordance with the calculated torque slope.

From US-A-5 207 122 a clutch-to-clutch shifting in automatic transmission is known. According to a shift control, a release element is released in such a manner as to allow an increase in the input shaft speed within a predetermined degree for a period of time, and subsequently an apply element is engaged during the period of time.

EP-A-0 435 378 relates to a method of controlling gear changes in an automatic transmission. The method controls changes in an automatic transmission for a vehicle from a lower speed ratio to a higher speed ratio. It can adaptively control a powered downshift in an automatic transmission, wherein a transmission aberration during a shift is diagnosed and corrected fully (or optionally, partially) on the next powered downshift between the same speed ratios. The method is carried out by monitoring transmission input and output speeds during a powered downshift, and identifying departures from acceptable speed patterns and the times during the shift when the departures occur.

It is, therefore, an object of the present invention to solve the above-specified problems and to provide a shift control system capable of preventing any drop of the output shaft torque and any excessive blowup due to a tie-up in the clutch-to-clutch shift.

The object is achieved by the features of the claims.

The automatic transmission according to the present invention comprises: first frictional engagement means 1 including a first frictional engagement element and a first hydraulic servo for releasing the first frictional engagement element when an oil pressure is drained therefrom; and second frictional engagement means 2 including a second frictional engagement element and a second hydraulic servo for applying the second frictional engagement element when the oil pressure is fed thereto, so that the shift from the predetermined gear stage to another is executed by releasing the first frictional engagement element and applying the second frictional engagement element. At the time of this shift, the drain oil pressure and the feed oil pressure of the individual first and second hydraulic servos are controlled, but these controls are carried out on the basis of the blown-up state of the engine E. Specifically, at the time of that shift, the blown-up state of the engine E is detected by blowup detecting means 3, and at least one of the feed oil pressure and the drain oil pressure is controlled by hydraulic control means 4 on the basis of the blown-up state detected, so that the blown-up state of the engine may be set at all times from the non-blown-hp state of the engine to a target blown-up state in which the engine is blown up to a predetermined extent. Specifically, at least one of the drain oil pressure and the feed oil pressure is corrected by setting the correction of the duty ratio to a zero value if the blown-up state of the engine is identical to the target blown-up state, to a positive value if the blown-up state of the engine is higher than the target blown-up state, and to a negative value if the blown-up state of the engine is lower than the target blown-up state.

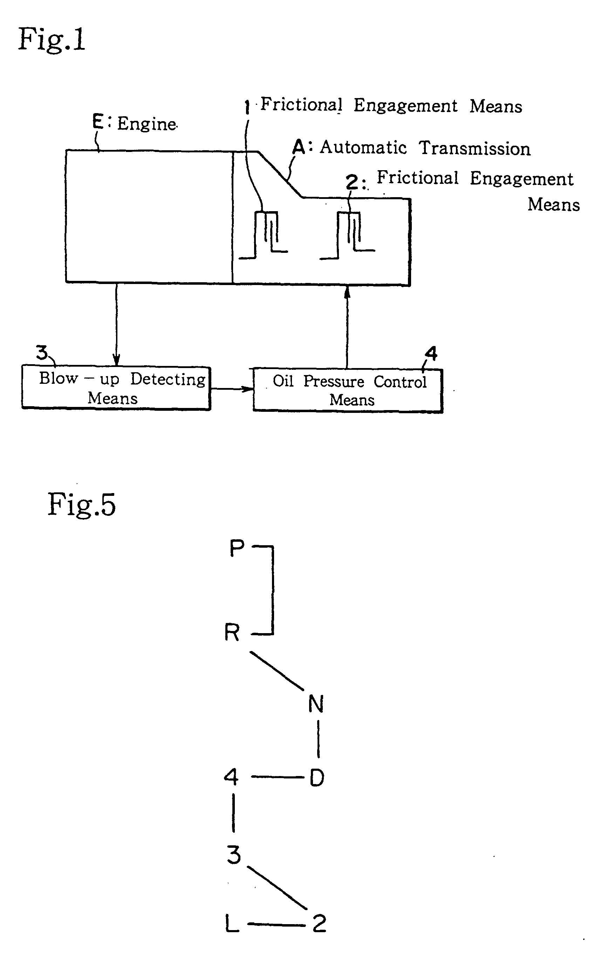

Fig. 1 is a block diagram showing the present invention conceptionally;
Fig. 2 is a block diagram showing a control system conceptionally according to one embodiment of the present invention;
Fig. 3 is a diagram showing a gear train of the automatic transmission mainly;
Fig. 4 is a diagram presenting an operation table for setting individual gear stages;
Fig. 5 is a diagram showing an array of range positions to be selected by a shift lever;
Fig. 6 is a diagram showing a portion of the hydraulic circuit;
Fig. 7 is a flow chart showing a control routine for learning/controlling the duty ratio on the basis of the blown-up state of the engine; and
Fig. 8 is a diagram plotting the relation between the blown-up state of the engine and the corrected value of the duty ratio.

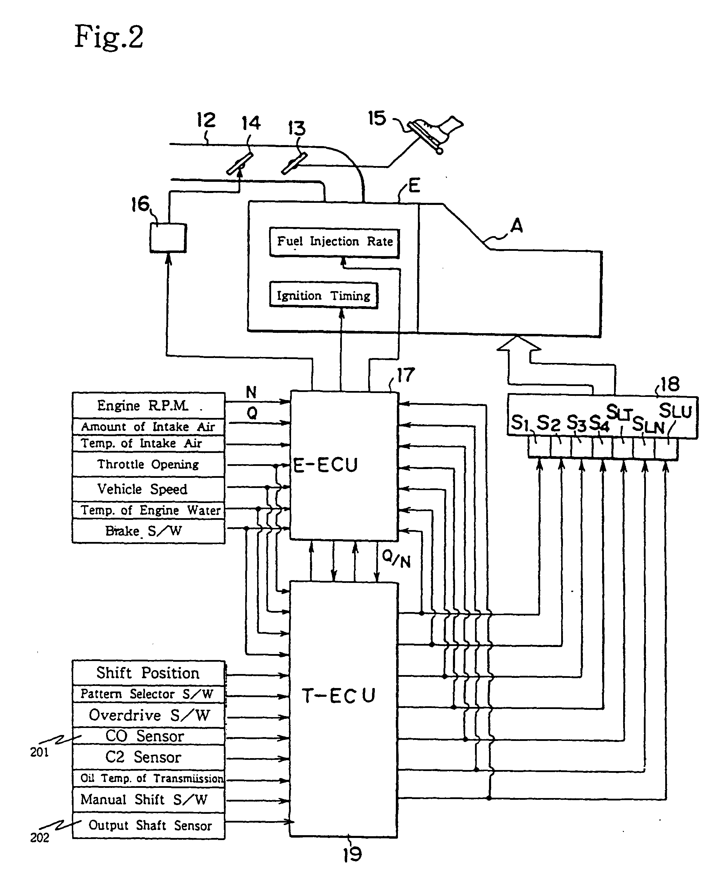

One embodiment of the present invention will be described in the following with reference to the accompanying drawings. Fig. 2 is a diagram showing an entire control system of the embodiment of the present invention. An engine E connected to the automatic transmission A is equipped in its intake pipe 12 with a main throttle valve 13 and a sub-throttle valve 14 located upstream of the former. The main throttle valve 13 is so connected to an accelerator pedal 15 that it is controlled according to the depression of the accelerator pedal 15. On the other hand, the sub-throttle valve 14 is controlled by a motor 16. There is provided an engine electronic control unit (E-ECU) 17 for controlling the motor 16 to regulate the opening that sub-throttle valve 14 and for controlling the fuel injection rate and the ignition timing of the engine E. This electronic control unit 17 is composed mainly of a central processing unit (CPU), memory units (RAM and ROM) and an input/output interface and is fed as control data with a variety of signals including an engine (E/G) R.P.M. N, an amount Q of intake air, a temperature of intake air, a throttle opening, a vehicle speed, a temperature of engine water and a brake switch.

In the automatic transmission A, a hydraulic control unit 18 controls the shift and a lockup clutch. The hydraulic control unit 18 is so constructed as to be electrically controlled and is equipped with: first to third shift solenoid valves S1 to S3 for executing the shift; a fourth solenoid valve S4 for controlling an engine braking state; a linear solenoid valve SLT for controlling the line pressure; a linear solenoid valve SLN for controlling an accumulator back pressure; and a linear solenoid valve SLU for controlling the lockup clutch.

There is further provided an automatic transmission electronic control unit (T-ECU) 19 for controlling the shift, the line pressure and/or the accumulator back pressure by outputting signals to those solenoid valves. This electronic control unit 19 is composed mainly of a central processing unit (CPU), memory units (RAM and ROM) and an input/output interface and is fed as the control data with the throttle opening, the vehicle speed, the engine water temperature, the brake switch signal, a shift position signal, a pattern select switch signal, an overdrive switch signal, a signal coming from a C0 sensor 201 for detecting the R.P.M. of a later-described clutch C0, a signal coming from an output shaft sensor 202 for detecting the R.P.M. of an output shaft 65, a signal coming from a C2 sensor for detecting the R.P.M. of a second clutch C2, an oil temperature of the automatic transmission, and a signal of a manual shift switch.

Moreover, the automatic transmission electronic control unit 19 and the engine electronic control unit 17 are connected with each other for data communications. Specifically, signals such as a signal of an amount (Q/N) of intake air per revolution are sent from the engine electronic control unit 17 to the automatic transmission electronic control unit 19, whereas signals such as a signal equivalent to a command signal for each solenoid valve or a signal for commanding a gear stage are sent from the automatic transmission electronic control unit 19 to the engine electronic control unit 17.

More specifically, the automatic transmission electronic control unit 19 decides the gear stage, the ON/OFF of the lockup clutch, or the regulated pressure level of the line pressure or the engaging pressure on the basis of the data inputted and the map stored in advance and outputs a command signal to a predetermined solenoid valve on the basis of the decision result to decide a failure or perform a control based on the decision. On the other hand, the engine electronic control unit 17 not only controls the fuel injection rate, the ignition timing and/or the opening of the sub-throttle valve 14 on the basis of the data inputted but also lowers the output torque temporarily by reducing the fuel injection rate at the shifting time of the automatic transmission A, by changing the ignition timing and/or by throttling the opening of the sub-throttle valve 14.

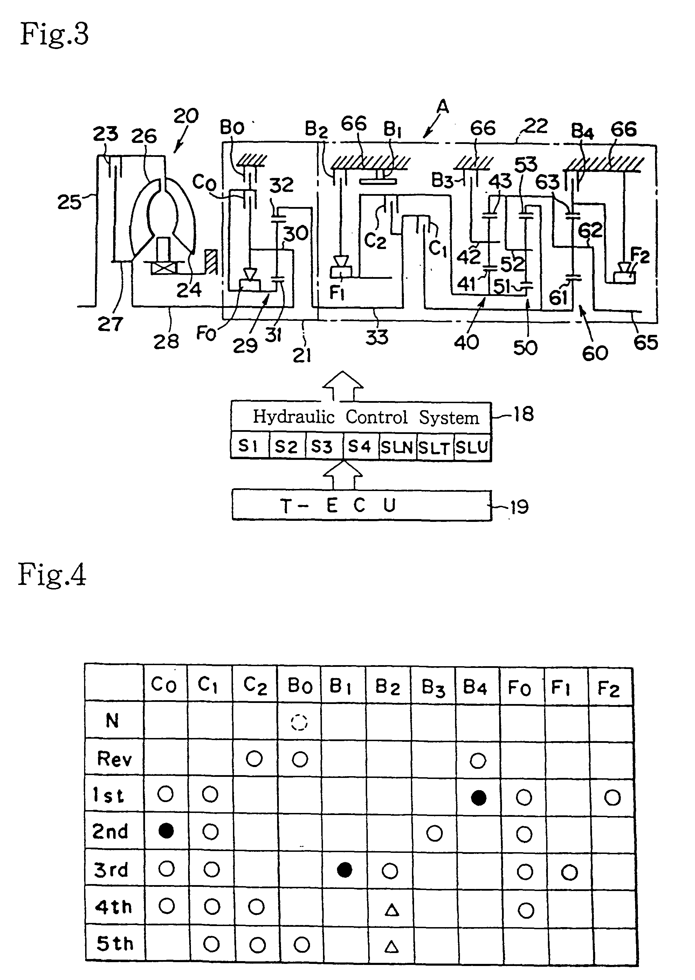

Fig. 3 is a diagram showing one embodiment of the gear train of the automatic transmission A described above. As shown, the gear train is constructed to set five forward and one reverse gear stages. Specifically, the automatic transmission A is constructed of a torque converter 20, an auxiliary transmission unit 21 and a main transmission unit 22. The torque converter 20 is equipped with a lockup clutch 23 which is interposed between a front cover 25 integrated with a pump impeller 24 and a member (or hub) 27 integrated with a turbine runner 26. The engine has its crankshaft (although both are not shown) connected to the front cover 25, and an input shaft 28 having the turbine runner 26 connected thereto is connected to a carrier 30 of an overdrive planetary gear mechanism 28 constituting the auxiliary transmission unit 21.

Between the carrier 30 and a sun gear 31 of the planetary gear mechanism 29, there are interposed the multi-disc clutch C0 and a one-way clutch F0. Incidentally, this one-way clutch F0 is applied in case the sun gear 31 rotates forward (i.e., in the rotating direction of the input shaft 28) relative to the carrier 30. There is also provided a multi-disc brake B0 for braking the rotation of the sun gear 31 selectively. Moreover, a ring gear 32 acting as the output element of the auxiliary transmission unit 21 is connected to an intermediate shaft 33 acting as the input element of the main transmission unit 22.

In the auxiliary transmission unit 21, therefore, the planetary gear mechanism 29 rotates as a whole with the multi-disc clutch C0 or the one-way clutch F0 being applied, so that the intermediate shaft 33 rotates at the same speed as that of the input shaft 28, thus establishing a lower gear stage. With the brake B0 being applied to stop the rotation of the sun gear 31, moreover, the ring gear 32 is accelerated with respect to the input shaft 28 to establish a higher gear stage.

On the other hand, the main transmission unit 22 is equipped with three sets of planetary gear mechanisms 40, 50 and 60, which have their individual rotary elements connected, as follows. Specifically, a sun gear 41 of the first planetary mechanism 40 and a sun gear 51 of the second planetary mechanism 50 are integrally connected to each other. Moreover, a ring gear 43 of the first planetary mechanism 40, a carrier 52 of the second planetary mechanism 50 and a carrier 62 of the third planetary mechanism 60 are connected to one another, and an output shaft 65 is connected to the carrier 62 of the third planetary mechanism 60. In addition, the second planetary mechanism 50 has its ring gear 53 connected to a sun gear 61 of the third planetary mechanism 60.

The gear train of this main transmission unit 22 can set one reverse and four forward gear stages and is composed of the following clutches and brakes for that settings. Of these, the clutches will be described at first. A first clutch C1 is interposed between a ring gear 53 of the second planetary mechanism 50 and the sun gear 61 of the third planetary mechanism 60, which are connected to each other, and the intermediate shaft 33. Moreover, the second clutch C2 is interposed between the sun gear 41 of the first planetary mechanism 40 and the sun gear 51 of the second planetary mechanism 50, which are connected to each other, and the intermediate shaft 33.

Here will be described the brakes. A first brake B1 is a band brake which is arranged to stop the rotations of the sun gears 41 and 51 of the first and second planetary mechanisms 40 and 50. Between these sun gears 41 and 51 (i.e., the common sun gear shaft) and a casing 66, there are arrayed in series a first one-way clutch F1 and a second brake B2 or a multi-disc brake. Of these, the first one-way clutch F1 is applied when the sun gears 41 and 51 are to rotate backward (of the rotating direction of the input shaft 28). A third brake B3 or a multi-disc brake is interposed between a carrier 42 of the first planetary mechanism 40 and the casing 66. Between a ring gear 63 of the third planetary mechanism 60 and the casing 66, there are arranged in parallel a fourth brake B4 or a multi-disc brake for braking the rotation of the ring gear 63 and a second one-way clutch F2. Incidentally, this second one-way clutch F2 is applied when the ring gear 63 is to rotate backward.

The automatic transmission A thus far described can set five forward and one reverse gear stages by applying/releasing the individual clutches and brakes, as tabulated in an operation table of Fig. 4. In Fig. 4: symbols ○ indicate the applied state; symbols ● indicate the applied state to be taken at the time of engine braking; symbols Δ indicate the applied or released state; and blanks indicate the released state.

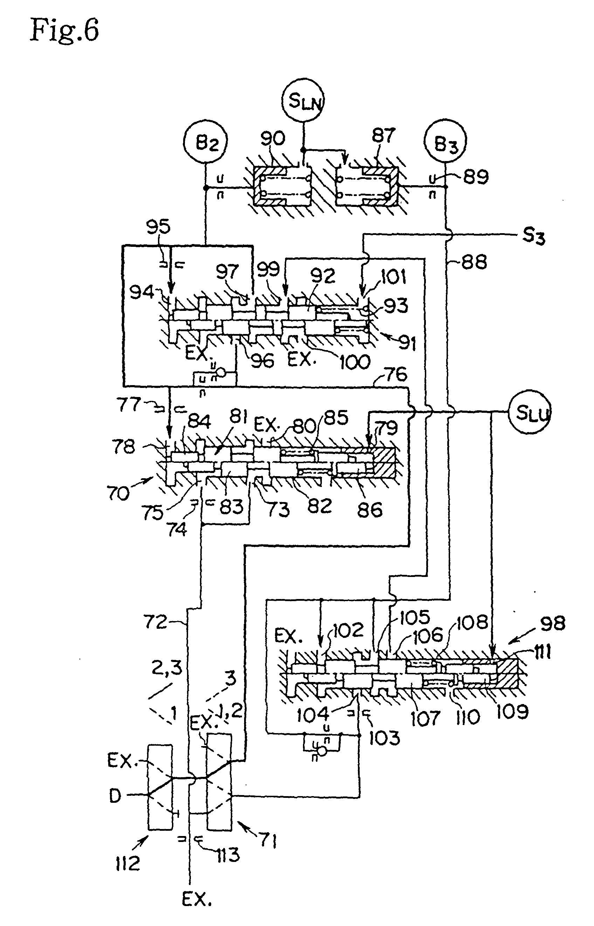

The individual gear stages appearing in Fig. 4 are set according to the running ranges which are selected by operating the (not-shown) shift lever, and the positions of those running ranges to be selected by the shift lever are arrayed, as shown in Fig. 5. Specifically, the array is made such that a parking (P) range position is followed by a reverse (R) range position and such that a neutral (N) range position 'is arranged subsequent to the R-range but oblique to the array of the P-range and the R-range. A drive (D) range position is arranged subsequent to the N-range in parallel with the aforementioned array direction of the P-range position and the R-range position. Moreover, a 4th speed range position is subsequently arranged at a right angle with respect to the array direction of the N-range and the D-range. In addition, a 3rd speed range position is arranged subsequent to the 4th speed range position in parallel with the aforementioned array direction of the N-range and the D-range. Moreover, a 2nd speed range position is arranged to have a relation similar to that which is taken by the N-range relative to the aforementioned R-range position. Finally, a low (L) range position is arranged to have a relation similar to that which is taken by the 4th speed range position relative to the D-range position.

Of these running ranges: the D-range can establish the five forward gear stages; the 4th speed range can establish the four forward gear stages excepting the 5th speed or the overdrive gear stage; the 3rd speed range can establish the gear stages to the 3rd speed; the 2nd speed range can establish the gear stages to the 2nd speed; and the L-range can establish only the first speed. In case, therefore, the shift lever is manually operated between the 3rd speed range position and the 2nd speed range position, there is established either an upshift from the 2nd speed to the 3rd speed or a downshift from the 3rd speed to the 2nd speed.

As enumerated in the operation table of Fig. 4, the shifts between the 2nd speed and the 3rd speed are effected by the clutch-to-clutch shifts in which both the application and release of the second brake B2 and the third brake B3 are changed together. In order to smoothen these shifts, a hydraulic circuit shown in Fig. 6 is incorporated into the aforementioned hydraulic control unit 18.

In Fig. 6, reference numeral 70 designates a 2-3 timing valve. This 2-3 timing valve 70 is formed with: an inlet port 73 communicating with a drain oil passage 72 of a 2-3 shift valve 71; a drain pressure input port 75 communicating with the drain oil passage 72 through an orifice 74; an input port 78 communicating with a supply oil passage 76 leading from the 2-3 shift valve 71 to the second brake B2 through an orifice 77; a signal port 79 to be fed with the signal pressure from the linear solenoid valve SLU for the lockup clutch; and a drain port 80. Moreover, the 2-3 timing valve 70 has its spool 81 formed with: a land 82 positioned at its one end for opening/closing the drain port 80; a land 83 positioned at an intermediate portion while partitioning the drain pressure input port 75 and the inlet port 73 and formed with a drain pressure receiving face at the side of the drain pressure input port 75; and a radially reduced land 84 positioned at the other end while partitioning the input port 78 and the drain pressure input port 75 and formed with a supply pressure receiving face. Still moreover, the land 82 at one end abuts against a pressure receiving piston 86 through a spring 85, and the pressure receiving piston 86 is formed with a face for receiving the signal pressure coming from the signal port 79.

An accumulator 87 for the third brake B3 is connected through an orifice 89 to an oil passage 88 leading to the third brake B3 and has its back pressure controlled to control the applying pressure of the third brake B3 by the signal pressure coming from the aforementioned linear solenoid valve SLN. Moreover, an accumulator 90 for the second brake B2 likewise has its back pressure controlled to control the applying pressure of the second brake B2 by the signal pressure coming from the linear solenoid valve SLN.

On the other hand, reference numeral 91 appearing in Fig. 6 designates a B-2 orifice control valve constituting fast fill means for the second brake B2. This B-2 orifice control valve 91 is formed with a control port 94 at its end portion opposed to the end portion which is equipped with a spring 93 for urging a spool 92 in the axial direction. The control port 94 is given communication with the second brake B2 through an orifice 95. The B-2 orifice control valve 91 is formed at its intermediate portion with an input port 96 connected to the aforementioned supply oil passage 76, and a second brake port 97 which is given communication with the input port 96 or not by the spool 92 and connected to the second brake B2. Further formed are a third brake port 99, which is connected to the third brake B3 through a later-described B-3 control valve 98, and a drain port 100 which is given communication with the third brake port 99 or not by the spool 92. At the end portion arranged with the spring 93, there is further formed a signal port 101 which is fed with the signal pressure from the third solenoid valve S3.

Here will be described the B-3 control valve 98. This is a valve for controlling the rate of applying/ releasing the oil pressure of the third brake B3. This B-3 control valve 98 is formed with: a signal port 102 connected to the oil passage 88 for causing the oil pressure of the third brake B3 to act as the signal pressure; a D-port 104 connected to the 2-3 shift valve 71 through an orifice 103; a brake port 105 given communication with the D-port 104 or not and connected to the oil passage 88; and a brake port 106 given communication with the brake port 105 or not and connected to the third brake port 99 in the aforementioned B-2 orifice control valve 91. A spool 107 for opening/closing those ports has its one end portion caused to abut against a piston 109 through a spring 108. The B-3 control valve 98 is further formed with a control port 110, which is opened between the spool 107 and the piston 109 and fed with the 3rd speed pressure, and a signal pressure port 111 for applying the signal pressure of the linear solenoid valve SLU for the lockup clutch to the piston 109. Incidentally, reference numeral 112 appearing in Fig. 6 designates a 1-2 shift valve, and numeral 113 designates an orifice formed in the drain oil passage 74.

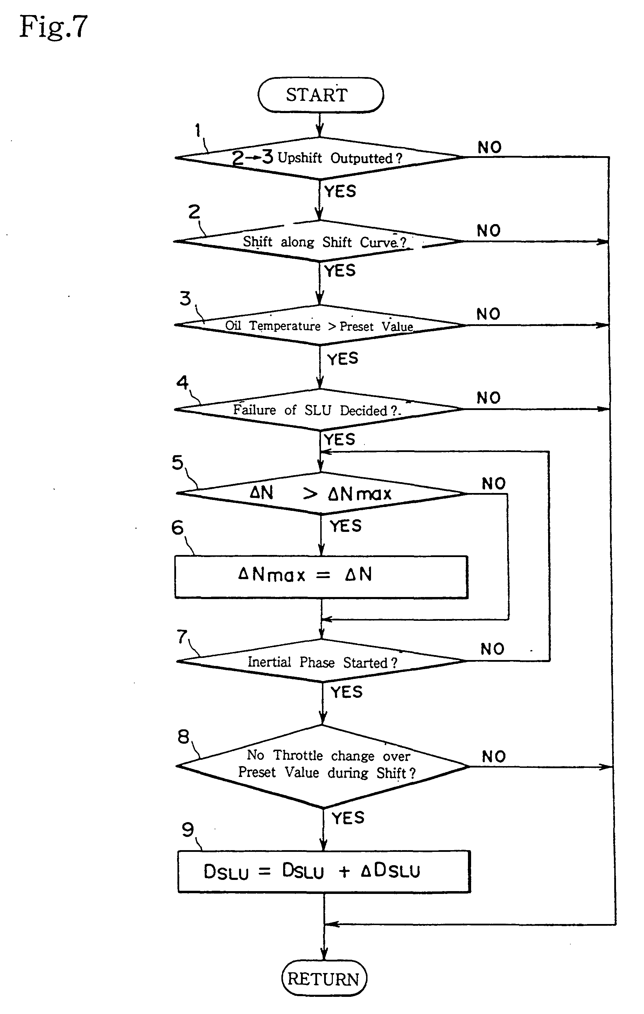

In the hydraulic control unit 18 having the aforementioned hydraulic circuit incorporated thereinto, the 2-3 timing valve 70 and the B-3 control valve 98 are fed as their control pressure with the signal pressure of the linear solenoid valve SLU for the lockup clutch, so that the timing for applying/ releasing the oil pressure of the third brake B3 can be controlled by that linear solenoid valve SLU. Specifically, this control is carried out by controlling the duty ratio of the linear solenoid valve SLU by the electronic control unit 19 such that the duty ratio is controlled on the basis of the blown-up state of the engine E. An example for this control routine is shown in Fig. 7.

This example shown in Fig. 7 is directed to the case of an upshift from the 2nd to 3rd speeds. First of all, at step 1, it is decided whether or not that upshift has been outputted. If this shift is outputted, it is decided at step 2 whether or not the upshift is along the shift curve. If this shift curve is followed, it is decided (at step 3) whether or not the oil pressure exceeds a preset constant value, and (at step 4) whether or not the failure of the aforementioned linear solenoid valve SLU has been decided. In other words, step 3 is executed because the automatic transmission A has to be in a stable state, and step 4 is executed because the normal operation of the linear solenoid valve SLU is premised by the overlap control.

Next, the maximum of the blowup of the engine E till the inertial phase is determined. Specifically, it is decided at step 5 whether or not the difference ΔN (= Nₑₙ - Nₑₙ₋₁) between the R.P.M. Nₑₙ of the engine E obtained at this time and the R.P.M. Nₑₙ₋₁ of the engine E obtained at the previous time is larger than the maximum Δ Nₘₐₓ obtained already. If the decision result is "YES", the R.P.M. difference Δ N is latched at the maximum (at step 6), and it is then decided (at step 7) whether or not the inertial phase has started. If this inertial phase has not started, the routine is returned to upstream of step 5, and it is decided again whether or not the difference between the engine R.P.M. detected at the previous time and the engine R.P.M. detected at this time exceeds the maximum latched already. If this decision result is "NO", the routine skips step 6 to step 8. In other words, the maximum of the rotational fluctuations of the engine E, i.e., the maximum of the amount of blow-up till the start of the inertial phase is determined by repeating the operations of step 5 and step 6 till the inertial phase starts.

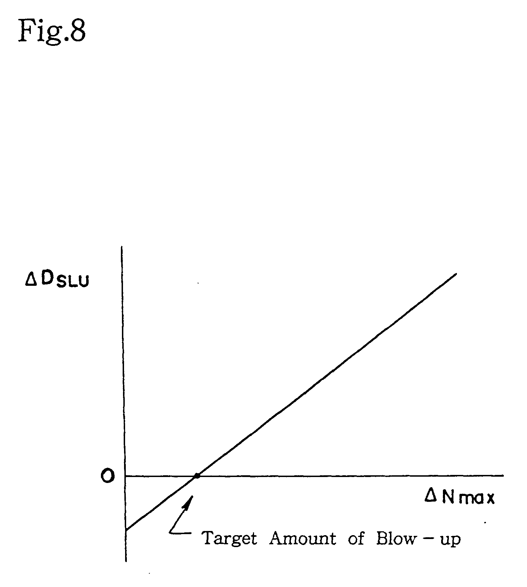

If the inertial phase has started, it is decided (at step 8) whether or not no throttle change over a preset value has occurred during the shift. If this' decision result is "YES", comparison is made between the aforementioned maximum of the blowup of the engine E and a target amount of blowup, in which the engine E is blown up to a predetermined extent from the non-blown-up state of the engine. If the maximum of the blowup of the engine E exceeds the aforementioned target amount of blowup, a correction value Δ Dslu is added (at step 9) to the duty ratio Dslu which has already been latched for controlling the aforementioned linear solenoid valve SLU. This correction value Δ Dslu is set according to the maximum blowup Δ Nₘₐₓ in the inertial phase and is plotted by way of example in Fig. 8. Specifically, in case the blowup of the engine E is high, the duty ratio Dslu is augmented by increasing the correction value Δ Dslu, so that the degree of overlap between the second brake B2 and the third brake B3 may be increased.

If the maximum blowup of the engine E is lower than the target blowup, the correction value Δ Dslu is set to a negative value to lower the duty ratio of the aforementioned linear solenoid valve SLU. In short, the control is made for an underlap tendency.

If, on the other hand, the aforementioned decision results of steps 1 to 4 and step 8 are "NO", no special control is made to return the procedure.

In the control unit thus far described, therefore, the overlap state or the underlap state between the frictional engagement means to take part in the clutch-to-clutch shift is controlled either while detecting the blown-up state of the engine E or according to the detected result, so that the amount of blowup of the engine E can be confined within a target range without being influenced by the aging of the hydraulic circuit or the like.

Incidentally, in the foregoing embodiment, the R.P.M. difference of the engine is used as the blowup amount of the engine, but this engine blowup may be determined from the difference between the C0 R.P.M. detected by the C0 sensor and the product of the R.P.M. of the output shaft detected from the output shaft sensor 202 and the gear ratio of the 2nd speed. Moreover, the embodiment is exemplified by a learning control in which the duty ratio is updated on the basis of the blowup amount till the start of the inertial phase. Still moreover, the present invention should not be limited to the overlap control for the clutch-to-clutch upshift but can be applied to an underlap control for a clutch-to-clutch downshift. In the foregoing embodiment, furthermore, the description has been made upon the automatic transmission having the gear train shown in Fig. 3. However, the present invention should not be limited to that embodiment but can also be applied to a control unit for an automatic transmission having a gear train of another construction, so that it can be applied to an overlap control for a clutch-to-clutch upshift other than the upshift from the 2nd to 3rd speeds. In the present invention, furthermore, it is quite natural that the hydraulic circuit for the overlap control should not be limited to that having the construction shown in Fig. 5.

As has been described hereinbefore, according to the shift control system of the present invention, the oil pressure of at least one of the releasing oil pressure and the applying oil pressure is subjected to such a learning control by correcting the duty ratio that the blown-up state of the engine for the clutch-to-clutch shift may always be changed from the non-blown-up state of the engine to the state of a predetermined target blowup. As a result, it is possible to reliably prevent the drop of the output shaft torque, which might otherwise be caused by the tie-up of the two frictional engagement elements due to the aging of the control device such as the hydraulic circuit, and to prevent any excessive blowup of the engine.

## Claims

1. A shift control system for an automatic transmission (A), comprising: first (1) and second (2) frictional engagement elements; and first and second hydraulic servos for applying/releasing said first (1) and second (2) frictional engagement elements by feeding/draining an oil pressure thereto, so that a predetermined gear stage is shifted to another gear stage by draining the oil pressure from said first hydraulic servo to release said first frictional engagement element (1) and by feeding the oil pressure to said second hydraulic servo to apply said second frictional engagement element (2), while controlling the drain oil pressure from said first hydraulic servo and the feed oil pressure to said second hydraulic servo during said gear stage shift, **characterized by**: blow-up detecting means (3) for detecting the maximum of the blow-up (ΔNₘₐₓ) of an engine (E) during said shift until start of an inertial phase; and hydraulic control means (4) for comparing said maximum (ΔNₘₐₓ) detected by said blow-up detecting means and a target amount of blow-up, in which the engine (E) is blown up to a predetermined extent from the non-blown-up state of the engine, to control at least one of said drain oil pressure and said application oil pressure by a latched duty ration (Dslu) of a solenoid valve (SLU) until start of said inertial phase and to add a correction value (ΔDslu) after start of said inertial phase thereby to effect said target blown-up state at the next shift from said predetermined gear stage to said another gear stage, such that the blown-up state of the engine(E) is lowered, if it is higher than said target blown-up state, but is raised if it is lower than said target blown-up state.

2. A shift control system according to claim 1,
wherein said hydraulic control means (4) further includes: a pressure regulator valve for regulating said oil pressure and controlling the regulated value.

3. A shift control system according to claim 1 or 2,
wherein said hydraulic control means (4) includes correction means for correcting said duty ratio (Dslu) to a zero value, if said engine blown-up state is identical to said target blown-up state, to a positive value, if said engine blown-up state is higher than said target blown-up state, and to a negative value if said engine blown-up state is lower than said target blown-up state.

4. A shift control system according to claim 2, or 3,
wherein said pressure regulator valve regulates the oil pressure to be drained from said first hydraulic servo (1).

## Patentansprüche

1. Schaltsteuersystem für ein Automatikgetriebe (A), aufweisend: ein erstes (1) und ein zweites (2) Reibungseingriffselement und eine erste und eine zweite hydraulische Servoeinrichtung zum Einrücken/Lösen des ersten (1) und des zweiten (2) Reibungseingriffselements durch Zuführen/Fortnehmen eines Öldrucks, so daß eine vorgegebene Gangstufe durch Fortnehmen des Öldrucks von der ersten hydraulischen Servoeinrichtung zum Lösen des ersten Reibungseingriffselements (1) und durch Zuführen des Öldrucks zur zweiten hydraulischen Servoeinrichtung zum Einrücken des zweiten Reibungseingriffselements (2) in eine andere Gangstufe umgeschaltet wird, während der von der ersten hydraulischen Servoeinrichtung fortgenommene Öldruck und der der zweiten hydraulischen Servoeinrichtung zugeführte Öldruck während des Gangstufenschaltens gesteuert werden, **gekennzeichnet durch**: eine Hochfahr-Erfassungseinrichtung (3) zum Erfassen des Maximums des Hochfahrens (ΔNₘₐₓ) eines Motors (E) während des Schaltens bis zum Beginn einer Trägheitsphase und eine Hydrauliksteuereinrichtung (4) zum Vergleichen des von der Hochfahr-Erfassungseinrichtung erfaßten Maximums (ΔNₘₐₓ) und eines Zielbetrags des Hochfahrens, wobei der Motor (E) aus dem nicht hochgefahrenen Zustand bis zu einem vorgegebenen Maß hochgefahren wird, um den Ablaßöldruck und/oder den Einrücköldruck **durch** ein festgelegtes Einschaltverhältnis (Dslu) eines Magnetventils (SLU) bis zum Beginn der Trägheitsphase zu steuern und um nach Beginn der Trägheitsphase einen Korrekturwert (ΔDslu) zu addieren und **dadurch** den angestrebten Hochfahrzustand beim nächsten Schalten von der vorgegebenen Gangstufe in die andere Gangstufe zu bewirken, so daß der Hochfahrzustand des Motors (E) verringert wird, falls er höher als der angestrebte Hochfahrzustand ist, daß er jedoch erhöht wird, falls er geringer als der angestrebte Hochfahrzustand ist.

2. Schaltsteuersystem nach Anspruch 1, wobei die Hydrauliksteuereinrichtung (4) weiter aufweist: ein Druckregelventil zum Regeln des Öldrucks und zum Steuern des geregelten Werts.

3. Schaltsteuersystem nach Anspruch 1 oder 2,
wobei die Hydrauliksteuereinrichtung (4) eine Korrektureinrichtung aufweist, zum Korrigieren des Einschaltverhältnisses (Dslu) um Null, falls der Hochfahrzustand des Motors mit dem angestrebten Hochfahrzustand identisch ist, um einen positiven Wert, falls der Hochfahrzustand des Motors höher als der angestrebte Hochfahrzustand ist, und um einen negativen Wert, falls der Hochfahrzustand des Motors geringer als der angestrebte Hochfahrzustand ist.

4. Schaltsteuersystem nach Anspruch 2 oder 3,
wobei das Druckregelventil den Öldruck regelt, der von der ersten hydraulischen Servoeinrichtung (1) abgeleitet werden soll.

## Revendications

1. Système de commande de changement de vitesse pour transmission automatique (A), comprenant : des premier (1) et second (2) éléments de mise en prise par friction; et des premier et second servomécanismes hydrauliques pour appliquer/relâcher lesdits premier (1) et second (2) éléments de mise en prise par friction en leur envoyant/soustrayant de l'huile sous pression, de sorte que l'on fait passer un étage de vitesse déterminé au préalable à un autre étage de vitesse en soustrayant l'huile sous pression dudit premier servomécanisme hydraulique pour relâcher ledit premier (1) élément de mise en prise par friction et en envoyant l'huile sous pression audit second servomécanisme hydraulique pour appliquer ledit second (2) élément de mise en prise par friction, tout en contrôlant la pression d'huile sous-traite dudit premier servomécanisme hydraulique et la pression d'huile envoyée audit second servomécanisme hydraulique pendant ledit changement d'étage de vitesse, **caractérisé par** : un moyen de détection de surrégime (3) pour détecter le maximum du surrégime (ΔNₘₐₓ) d'un moteur (E) pendant ledit changement jusqu'au début d'une phase inertielle; et un moyen de commande hydraulique (4) pour comparer ledit maximum (ΔNₘₐₓ) détecté par ledit moyen de détection de surrégime et une valeur cible de surrégime, dans laquelle le moteur (E) monte en surrégime jusqu'à une valeur déterminée à l'avance à partir de l'état sans surrégime du moteur, pour commander au moins l'une desdites pression d'huile soustraite et pression d'huile appliquée par un rapport cyclique verrouillé (Dslu) d'une électrovanne (SLU) jusqu'au début de ladite phase inertielle et pour ajouter une valeur de correction (ΔDslu) après le début de ladite phase inertielle pour effectuer de ce fait ledit état de surrégime cible au prochain changement dudit étage de vitesse déterminé au préalable audit autre étage de vitesse, de sorte que l'état de surrégime du moteur (E) est réduit, s'il est supérieur audit état de surrégime cible, mais est augmenté s'il est inférieur audit état de surrégime cible.

2. Système de commande de changement de vitesse selon la revendication 1, dans lequel ledit moyen de commande hydraulique (4) comporte en outre : une vanne de régulation de pression pour réguler ladite pression d'huile et contrôler la valeur réglée.

3. Système de commande de changement de vitesse selon la revendication 1 ou 2, dans lequel ledit moyen de commande hydraulique (4) comporte un moyen de correction pour corriger ledit rapport cyclique (Dslu) en le faisant passer à une valeur nulle, si ledit état de surrégime du moteur est identique audit état de surrégime cible, à une valeur positive si ledit état de surrégime du moteur est supérieur audit état de surrégime cible, et à une valeur négative si ledit état de surrégime du moteur est inférieur audit état de surrégime cible.

4. Système de commande de changement de vitesse selon la revendication 2 ou 3, dans lequel ladite vanne de régulation de pression règle la pression d'huile à soustraire dudit premier servomécanisme hydraulique (1).
